(19) Europäisches Patentamt
European Patent Office
Office européen des brevets

(11) Publication number: **0 303 383 B1**

(12) **EUROPEAN PATENT SPECIFICATION**

(45) Date of publication of patent specification: **16.03.94**

(51) Int. Cl.5: **A01N 47/36**, //(A01N47/36, 47:36,43:90,43:88,43:70,43:20, 39:04,37:40,37:26,37:22,33:18)

(21) Application number: **88307127.6**

(22) Date of filing: **02.08.88**

The file contains technical information submitted after the application was filed and not included in this specification

# (54) Herbicidal composition.

(30) Priority: **10.08.87 JP 199287/87**
**02.06.88 JP 136043/88**

(43) Date of publication of application:
**15.02.89 Bulletin 89/07**

(45) Publication of the grant of the patent:
**16.03.94 Bulletin 94/11**

(84) Designated Contracting States:
**AT BE CH DE ES FR GB GR IT LI LU NL SE**

(56) References cited:
**EP-A- 0 237 292**
**AU-B- 6 813 687**

(73) Proprietor: **ISHIHARA SANGYO KAISHA, LTD.**
**No. 3-22, Edobori 1-chome**
**Nishi-ku Osaka(JP)**

(72) Inventor: **Kimura, Fumio c/o Ishihara Sangyo K.K.**
**Chuo Kenkyusho**
**3-1, Nishishibukawa 2-chome**
**Kusatsu-shi Shiga-ken(JP)**
Inventor: **Haga, Takahiro c/o Ishihara Sangyo K.K.**
**Chuo Kenkyusho**
**3-1, Nishishibukawa 2-chome**
**Kusatsu-shi Shiga-ken(JP)**
Inventor: **Sakashita, Nobuyuki c/o Ishihara Sangyo K.K.**
**Chuo Kenkyusho**
**3-1, Nishishibukawa 2-chome**
**Kusatsu-shi Shiga-ken(JP)**
Inventor: **Honda, Chimoto c/o Ishihara Sangyo K.K.**
**Chuo Kenkyusho**
**3-1, Nishishibukawa 2-chome**
**Kusatsu-shi Shiga-ken(JP)**
Inventor: **Murai, Shigeo c/o Ishihara Sangyo K.K.**
**Chuo Kenkyusho**
**3-1, Nishishibukawa 2-chome**
**Kusatsu-shi Shiga-ken(JP)**

(74) Representative: **Pearce, Anthony Richmond et al**
**MARKS & CLERK**
**Alpha Tower**
**Suffolk Street**
**Oueensway Birmingham B1 1TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 303 383 B1

Rank Xerox (UK) Business Services
(3.10/3.09/3.3.3)

## Description

The present invention relates to a herbicidal composition comprising as the effective components at least one compound selected from among pyridinesulfonamide compounds and their salts, and at least one other specific herbicidal compound.

Japanese patent application No. 62-8286 (published on August 5, 1987 as publication No. KOKAI 62-178588) discloses herbicidal pyridinesulfonamide compounds having the formula:

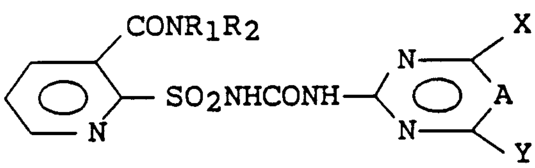

wherein $R_1$ and $R_2$ are a hydrogen atom or an alkyl group, X and Y are a methyl group or a methoxy group, and A is =CH- group or =N- group, and their salts. And this patent application further discloses that the above described pyridinesulfonamide compounds may be mixed with another herbicidal compound, such as 3,6-dichloro-2-methoxybenzoic acid 3-(1-methylethyl)-IH-2,1,3-benzothiadiazin-4(3H)-one-2,2-dioxide, 2-(4-chloro-6-ethylamino-1,3,5-triazin-2-ylamino)-2-methyl propionitrile, 2-chloro-4-ethylamino-6-isopropylamino-1,3,5-triazine, ethyl 2,4-dichlorophenoxy acetate, 2-(3,5-dichlorophenyl)-2-(2,2,2-trichloroethyl) oxirane, N-(1-ethylpropyl)-2,6-dinitro-3,4-xylidine, 2-chloro-2',6-diethyl-N-(methoxymethyl)acetanilide, 2-chloro-6'-ethyl-N-(2-methoxy-1-methylethyl)aceto-o-toluidide and the like, without showing specific biological test data.

European patent application Nos. 87300502.9 (published on August 12, 1987 as publication No. 232,067) and 87301954.1 (published on September 16, 1987 as publication No. 237,292) also disclose partly that the above described pyridinesulfonamide compounds may be mixed with another herbicidal compound such as those described in Japanese patent application No. 62-8286, without showing specific biological test data.

The present invention provides a herbicidal composition comprising, as the effective components, (A) at least one compound selected from a pyridinesulfonamide compound of formula (I):

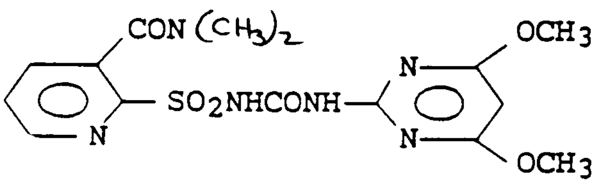

(I)

and (B) methyl 2-[[[4,6-bis-(difluoromethoxy)-pyrimidin-2-yl]aminocarbonyl]aminosulfonyl]benzoate.

The herbicidal composition of the present invention provides a wider weeding spectrum than the use of any individual compound alone, and sufficient weed-killing effect throughout the entire period of growth of corns by spraying only once.

In general, many kinds of weeds coexist and grow together but the periods of germination and growth differ from weed to weed. This inevitably results in spraying of a herbicide on many kinds of weeds in different stages of growth. As a matter of fact, it is considerably difficult to kill every weed by spraying a herbicide thereon only once. If some weeds remain alive, some of them will grow later and others will regerminate even if parts of them above the ground have been killed once, with the result that they will grow thick eventually. In the case, therefore, the effect of spraying a herbicide is halved. Accordingly, there still is a strong demand for development of a herbicide which has a wide weeding spectrum, is effective for fully-grown weeds, and can maintain the weed-controlling effect thereof for a desired period of time.

The instant applicant previously filed a patent application (Japanese Patent Application No. 62-17,323) on the basis of a finding that the pyridine-sulfonamide compound represented by the formula (I) described hereinabove has a very high weed-killing effect for a wide variety of weeds including highly harmful weeds while showing highly safe levels for corns. However, it sometimes happens that these compounds cannot perfectly exterminate some particular kinds of weeds though it depends on conditions involving the amount and time of application thereof, and that new weeds grow from soil in actual fields after application of any one of these compounds.

As a result of experiments made on the combination of the pyridinesulfonamide compound of the formula (I) with various herbicidal compounds with a view to solving the above-mentioned problems, the inventors of the present invention have found that the use of the herbicidal composition according to the present invention as defined above provides a wider weeding spectrum than the use of any individual compound alone, and that a sufficient weed-killing effect can be maintained through the whole period of growth of corns by spraying such a mixture only once. The present invention has been completed based on these findings.

The pyridine sulfonamide compound of the formula (I) above has a melting point of 169 - 173 °C (Compound (A)).

The mixing ratio (by weight) of Compound (A) to Compound (B) is generally 1:800 to 200:1, desirably 1:200 to 20:1. The suitable amount of application of the compounds cannot uniquely be determined because it varies depending on the form of preparation, the time of application, the kind of object weed, and the like. In general, however, the amount of the compound (A) is about 0.05 to 10 g/a, while the amount of the compound (B) is about 0.05 to 40 g/a.

The herbicidal composition of the present invention can be applied to a wide variety of sites including upland fields, orchards, mulberry fields, forests, agricultural roads, grounds, and factory sites. The method of application of the herbicidal composition can be arbitrarily chosen from a soil treatment application and a foliage treatment application.

The herbicidal composition of the present invention is prepared by blending various adjuvants with the pyridinesulfonamide compound of the formula (I) and the other specific herbicidal compound to form an emulsifiable concentrate, a wettable powder, a suspension concentrate, granules, a dust, a water-soluble powder or the like according to any customary method of preparing an agricultural preparation. The pyridinesulfonamide compound of the formula (I) and the other specific herbicidal compound may be either mixed together and formed into a preparation, or formed into separate preparations and then mixed with each other. Examples of the above-mentioned adjuvants include solid carriers such as diatomaceous earth, slaked lime, calcium carbonate, talc, white carbon, kaolin, bentonite, jeaklite, water soluble starch, and sodium bicarbonate; solvents such as toluene, xylene, solvent naphtha, ethanol, dioxane, acetone, isophorone, methyl isobutyl ketone, dimethylformamide, dimethylsulfoxide, and N-methyl-2-pyrrolidone; spreaders and surfactants such as sodium alkylsulfates, sodium alkylbenzenesulfonates, sodium lignosulfonate, polyoxythylene glycol alkyl ethers, polyoxyethylene lauryl ether, polyoxyethylene alkylaryl ethers, polyoxyethylene fatty acid esters, and polyoxyethylene sorbitan fatty acid esters; and vegetable oils and mineral oils such as olive oil, kapok oil, castor oil, papaya oil, camellia oil, coconut oil, sesame oil, corn oil, rice bran oil, peanut oil, cotton seed oil, soybean oil, rape seed oil, linseed oil, tung oil and liquid paraffin.

Description will now be made of examples of formulation of the herbicidal composition of the present invention, which, however, are not limitative.

Formulation Example 1:

| | | |
|---|---|---|
| (1) | Compound (A) | 1 part by weight |
| (2) | Compound (B) | 2.5 parts by weight |
| (3) | Dikssol W-92 | 2 parts by weight |
| (4) | Newlite | 94.5 parts by weight |

The above-mentioned components are mixed and pulverised to obtain a dust.

Formulation Example 2:

| | | |
|---|---|---|
| (1) | Compound (A) | 5 parts by weight |
| (2) | Compound (B) | 37.5 parts by weight |
| (3) | Dikssol W-66 | 5 parts by weight |
| (4) | Dikssol W-0913 | 2 parts by weight |
| (5) | diatomaceous earth | 50.5 parts by weight |

The above-mentioned components are mixed to obtain a wettable powder.

Formulation Example 3:

| | | |
|---|---|---|
| (1) | Compound (A) | 5 parts by weight |
| (2) | Compound (B) | 50 parts by weight |
| (3) | Sorpol 5050 | 3 parts by weight |
| (4) | Sorpol 5073 | 4 parts by weight |
| (5) | Hi-Filler No. 10 | 38 parts by weight |

The above-mentioned components are mixed to obtain a wettable powder.

Formulation Example 4:

| | | |
|---|---|---|
| (1) | Compound (A) | 1 part by weight |
| (2) | Compound (B) | 15 parts by weight |
| (3) | Sorpol 5039 | 5 parts by weight |
| (4) | Lavelin S | 2 parts by weight |
| (5) | Carplex #80 | 15 parts by weight |
| (6) | Kaolin | 62 parts by weight |

The above-mentioned components are mixed to obtain a wettable-powder.

Formulation Example 5:

| | | |
|---|---|---|
| (1) | Compound (A) | 0.1 part by weight |
| (2) | Compound (B) | 1 part by weight |
| (3) | Dikssol W-92 | 2 parts by weight |
| (4) | Newlite | 96.9 parts by weight |

The above-mentioned components are mixed and pulverised to obtain a dust.

Formulation Example 6:

| | | |
|---|---|---|
| (1) | Compound (A) | 1 part by weight |
| (2) | Compound (B) | 20 parts by weight |
| (3) | Dikssol W-66 | 5 parts by weight |
| (4) | Dikssol W-0913 | 2 parts by weight |
| (5) | diatomaceous earth | 72 parts by weight |

The above-mentioned components are mixed to obtain a wettable powder.

Formulation Example 7:

| | | |
|---|---|---|
| (1) | Compound (A) | 20 parts by weight |
| (2) | Compound (B) | 40 parts by weight |
| (3) | Sorpol 5039 | 5 parts by weight |
| (4) | Lavelin S | 2 parts by weight |
| (5) | Kaolin | 33 parts by weight |

The above-mentioned components are mixed to obtain a wettable powder.

Formulation Example 8:

| | | |
|---|---|---|
| (1) | Compound (A) | 4 parts by weight |
| (2) | Compound (B) | 30 parts by weight |
| (3) | Dikssol W-66 | 5 parts by weight |
| (4) | Dikssol W-0913 | 2 parts by weight |
| (5) | diatomaceous earth | 59 parts by weight |

The above-mentioned components are mixed to obtain a wettable powder.

Formulation Example 9:

| | | |
|---|---|---|
| (1) | Compound (A) | 0.2 parts by weight |
| (2) | Compound (B) | 1 part by weight |
| (3) | Dikssol W-92 | 2 parts by weight |
| (4) | Newlite | 96.8 parts by weight |

The above-mentioned components are mixed and pulverised to obtain a dust.

Formulation Example 10:

| | | |
|---|---|---|
| (1) | Compound (A) | 5 parts by weight |
| (2) | Compound (B) | 5 parts by weight |
| (3) | Dikssol W-66 | 5 parts by weight |
| (4) | Dikssol W-0913 | 2 parts by weight |
| (5) | diatomaceous earth | 83 parts by weight |

The above-mentioned components are mixed to obtain a wettable powder.

Formulation Example 11:

| | | |
|---|---|---|
| (1) | Compound (A) | 40 parts by weight |
| (2) | Compound (B) | 10 parts by weight |
| (3) | Sorpol 5039 | 5 parts by weight |
| (4) | Lavelin S | 2 parts by weight |
| (5) | Carplex #80 | 15 parts by weight |
| (6) | kaolin | 28 parts by weight |

The above-mentioned components are mixed to obtain a wettable powder.

Formulation Example 12:

| | | |
|---|---|---|
| (1) | Compound (A) | 3 parts by weight |
| (2) | Compound (B) | 2 parts by weight |
| (3) | corn oil | 81 parts by weight |
| (4) | Sorpol 3815 | 12 parts by weight |
| (5) | bentonite-alkylamine complex | 2 parts by weight |

The above-mentioned components are mixed uniformly and pulverised by Dyno-Mill (Willy A. Bachofen AG) to obtain a suspension concentrate.

[Notes]

| | |
|---|---|
| Dikssol W-92, W-66 and W-0913, and Lavelin S: | trade names of products manufactured by Dai-ichi Kogyo Seiyaku Co., Ltd. |
| Newlite: | trade name of a product manufactured by Nippon Taikagenryo Co., Ltd. |
| Sorpol 5050, 5073, 5039, 3815: | trade name of products manufactured by Toho Chemical Co., Ltd. |
| Hi-Filler No. 10: | trade name of a product manufactured by Matsumura Sangyo Co., Ltd. |
| Carplex #80: | trade name of a product manufactured by Shionogi & Co., Ltd |

As an example of biological tests on the herbicidal composition of the present invention, description will now be made of a Test Example which, however, is not limitative.

Test Example

1/1,500 are (a) pots were filled with upland soil. Corn (variety: Royal Dent 105T), cocklebur (Xanthium strumarium), morningglory (Ipomoea purpurea), prickly sida (Sida spinosa), Pigweed (Amaranthus retroflexus) and barnyard grass (Echinochloa crusgalli) were sown in the pots.

When the test plants reached respective given growth stage (a 2.5-leaf stage for corn, a 1.5-leaf stage for cocklebur, a 2.0-leaf stage for morningglory, a 1.0-leaf stage for prickly sida and pigweed, and a 1.5-leaf stage for barnyard grass), a predetermined amount of a herbicidal composition which was diluted in 5 liters, per are (a), of water to prepare an aqueous solution to which an agricultural spreader was then added in an amount of 0.2% by volume based on the total, was foliarly applied to the plants with a small spray gun. The progress of growth of the plants was visually observed 14 days after application to evaluate the degree of growth control according to 10 ratings (1: the same as in an untreated plot - 10: perfect growth control). The results are shown in Table 1:

Table 1

| Mixing Partner Compound and Amount Thereof (g/a) \ Compound (A) and Amount Thereof (g/a) | | Degree of Growth Control | | | | | | | | |
|---|---|---|---|---|---|---|---|---|---|---|
| | | Subject Plants | | | | | | | | |
| | | corn | | | cocklebur | | | morningglory | | |
| | | 0.3 | 0.15 | 0 | 0.3 | 0.15 | 0 | 0.3 | 0.15 | 0 |
| (B) | 0.3 | 1 | 1 | 1 | 10 | 10 | 9 | 7 | 6 | 6 |
| | 0.15 | 1 | 1 | 1 | 9 | 9 | 9 | 7 | 6 | 5 |
| | 0 | 1 | 1 | - | 9 | 8 | - | 6 | 6 | - |

Table 1 (continued)

| Mixing Partner Compound and Amount Thereof (g/a) \ Compound (A) and Amount Thereof (g/a) | | Degree of Growth Control | | | | | | | | |
|---|---|---|---|---|---|---|---|---|---|---|
| | | Subject Plants | | | | | | | | |
| | | prickly sida | | | pigweed | | | barnyard grass | | |
| | | 0.3 | 0.15 | 0 | 0.3 | 0.15 | 0 | 0.3 | 0.15 | 0 |
| (B) | 0.3 | 7 | 6 | 7 | 10 | 10 | 10 | 10 | 10 | 1 |
| | 0.15 | 6 | 6 | 6 | 10 | 10 | 10 | 10 | 10 | 1 |
| | 0 | 6 | 5 | - | 10 | 10 | - | 9 | 7 | - |

## Claims

1. A herbicidal composition characterized by comprising, as the effective components,

(A) a pyridinesulfonamide compound represented by the formula (I):

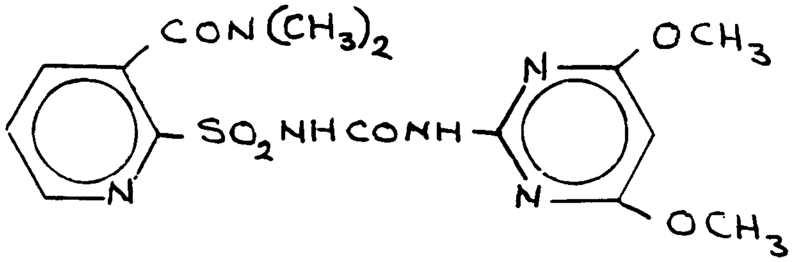

(I)

and

(B) methyl 2-[[[4,6-bis-(difluoromethoxy)-pyrimidin-2-yl]aminocarbonyl]aminosulfonyl]benzoate.

**2.** A method of producing a herbicidal composition characterized by a step of mixing
(A) a pyridinesulfonamide compound represented by the formula (I):

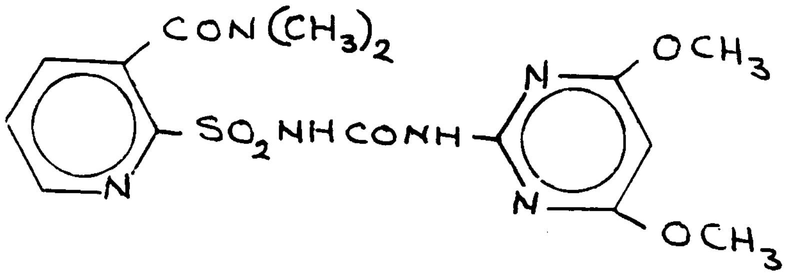

(I)

and

(B) methyl 2-[[[4,6-bis-(difluoromethoxy)-primidin-2-yl]aminocarbonyl]aminosulfonyl]benzoate.

**3.** A herbicidal composition as claimed in Claim 1, wherein the mixing ratio of (A) to (B) is 20:1 to 1:200 by weight.

**4.** A method according to Claim 2, wherein the mixing ratio of (A) to (B) is 20:1 to 1:200 by weight.

**5.** A herbicidal composition as claimed in Claim 1, wherein the mixing ratio of (A) to (B) is 1:1 to 200 by weight.

**6.** A method according to Claim 2, wherein the mixing ratio of (A) to (B) is 1:1 to 200 by weight.

**Patentansprüche**

**1.** Herbizide Zusammensetzung,
dadurch **gekennzeichnet**, daß
sie, als die wirksamen Komponenten,

(A) eine Pyridinsulfonamid-Verbindung der Formel (I):

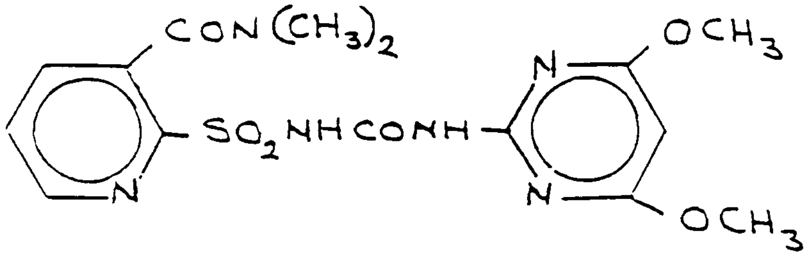

(I)

und

(B) Methyl-2-[[[4,6-bis(difluormethoxy)pyrimidin-2-yl] aminocarbonyl]aminosulfonyl]benzoat enthält.

**2.** Verfahren zur Herstellung einer herbiziden Zusammensetzung,
dadurch **gekennzeichnet**, daß
man

(a) eine Pyridinsulfonamid-Verbindung der Formel (I):

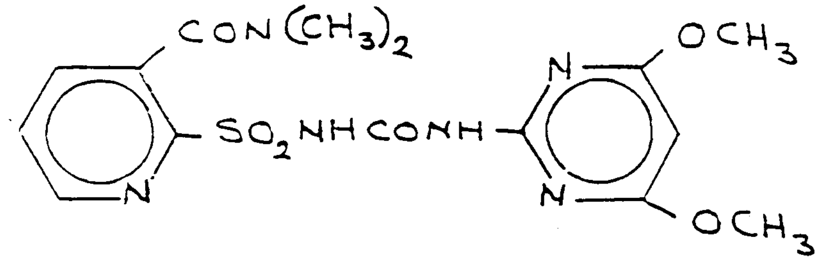

(I)

und

(b) Methyl-2-[[[4,6-bis(difluormethoxy)pyrimidin-2-yl] aminocarbonyl]aminosulfonyl]benzoat vermischt.

**3.** Herbizide Zusammensetzung gemäß Anspruch 1, worin das Mischungsverhältnis von (A) zu (B) 20:1 bis 1:200, bezogen auf das Gewicht, beträgt.

**4.** Verfahren gemäß Anspruch 2, wobei das Mischungsverhältnis (A) zu (B) 20:1 bis 1:200, bezogen auf das Gewicht, beträgt.

**5.** Herbizide Zusammensetzung gemäß Anspruch 1, worin das Mischungsverhältnis von (A) zu (B) 1:1 bis 200, bezogen auf das Gewicht, beträgt.

**6.** Verfahren gemäß Anspruch 2, wobei das Mischungsverhältnis von (A) zu (B) 1:1 bis 200, bezogen auf das Gewicht, beträgt.

**Revendications**

**1.** Composition herbicide caractérisée en ce qu'elle comprend en tant que composants efficaces,

(A) un composé de pyridinesulfonamide représenté par la formule (I) :

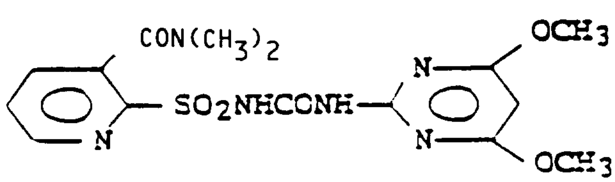

(I)

et
(B) du 2-[[[4,6-bis-(difluorométhoxy)-pyrimidin-2-yl]aminocarbonyl]aminosulfonyl]benzoate de méthyle.

**2.** Procédé de production d'une composition herbicide caractérisée par l'étape de mélange de
(A) un composé de pyridinesulfonamide représenté par la formule (I) :

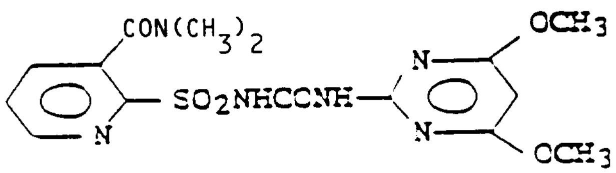

(I)

et
(B) le 2-[[[4,6-bis-(difluorométhoxy)-pyrimidin-2-yl]aminocarbonyl]aminosulfonyl]benzoate de méthyle.

**3.** Composition herbicide selon la revendication 1, dans laquelle le rapport de mélange de (A) par rapport à (B) est compris entre 20:1 et 1:200 en poids.

**4.** Procédé selon la revendication 2, dans lequel le rapport de mélange de (A) par rapport à (B) est compris entre 20:1 et 1:200 en poids.

**5.** Composition herbicide selon la revendication 1, dans lequel le rapport de mélange de (A) par rapport à (B) vaut 1:1 à 200 en poids.

**6.** Procédé selon la revendication 2, dans lequel le rapport de mélange de (A) par rapport à (B) vaut 1:1 à 200 en poids.